# EUROPEAN PATENT APPLICATION

(11) **EP 1 879 089 A2**
(43) Date of publication of application: **16.01.2008**
(21) Application number: 06398009.8
(22) Date of filing: 14.07.2006
(51) Int. Cl.: G05D 7/06

(54) **System for gas flow rate control and gas control valve**

(71) Applicant: Thermojet Do Brasil, LTDA., São Paulo (BR)
(72) Inventor: Gallina, Renato, São Paulo (BR); Giacomini, Renato, Santo André, São Paulo (BR); Donke, Sergio Lopes, São Paulo (BR); Ferreira, Heldai Lemos, Parque Savoy City, São Paulo (BR); Polati, Eduardo Sala, Embu, São Paulo (BR); Peret, Caio Moldehnhauer, São Bernardo do Campo, São Paulo (BR); Alvim de Castro, Alfredo José, Osasco, São Paulo (BR); Passos, Ricardo Leite, São Caetano do Sul, São Paulo (BR); Mazzutti, Rodrigo, Santo André, São Paulo (BR)
(74) Representative: Pereira da Cruz, Joao

(57) **Abstract**

The present invention relates to a system for high or low pressure gas flow rate control and a high or low pressure gas control valve, consisting of a system (S) which controls the movement of the ram of the valve (1) by measuring the difference in pressure between the inlet and outlet of said valve (1), in order to compensate the error between the actual and programmed flow rates, wherein the valve (1) comprises a Venturi (3) being regulated by said ram.

## Description

### Introduction

This patent application relates to an unprecedented single system for high or low pressure gas flow rate control and a high or low pressure gas control valve, namely a system capable of actively controlling, regulating and measuring the flow of gases in high or low pressure media through a single valve which incorporates its own original characteristics, specifically designed for practical application in any industrial or non-industrial sector for the transportation and measurement of gases within the productive process. In general terms, this system/valve is different in design from others, since it takes account of the concept of flow differential inside the valve whose performance is used to open or close the said valve, thus compensating the "error" or difference between the actual and programmed flow, in addition to being viable by virtue of the use of a single valve.

### Technical field and use of the invention

Traditionally, there are several applications for the supply of combustible and non-combustible gas, for example the supply of combustible gas for the combustion system of burners and/or internal combustion engines.

Using the same inventive concept, the system/valve of the invention can be widely used in the sectors listed below, among many others:
- Control of extraction and internal pressure in industrial ovens;
- Industrial systems for the transportation and measurement of gases within the productive process, for example the admission of gas as a reagent in large-scale reactors, injection of nitrogen in the conformation of polymers by blowing; spray drying of powders, etc.;
- Compressed air systems;
- Medical equipment for hospitals;
- Laboratory equipment.

### Brief description of prior art

In general terms, the conventional systems for controlling, regulating and measuring gases use various specific valves in order to achieve an end, which is the supply of a gas flow controlled and adjusted to the user's needs, compensating the fluctuations inherent to gas or air supply, in addition to valves and mechanisms that are strictly used to monitor the said valves.

Conventionally, a complete system of valves for the passage of gas or air through a line basically includes the following individual components:
- Pressure regulation valve(s) intended to stabilize inlet pressure;
- Pressure gauge(s) for measuring the inlet and outlet pressure of gas or air;
- Temperature meters;
- Flow control valve(s) for stipulating the desired flow of gas or air;
- Flow measuring valve(s) to serve as parameter(s) for the flow control valve(s);
- Safety valve(s) guaranteeing the shut-off of the gas passage in predefined situations, for example in the absence of a flame in the burner or power supply failure.

In the case of conventional means, flow normalization according to temperature and pressure is carried out subsequently, and is not used for flow control itself.

In short, in the said conventional means, individual flow regulation and measurement mechanisms are used, also requiring extra pressure and temperature flow normalizing sensors (presentation of the flow equivalent to normal temperature and pressure conditions instead of the actual flow). This normalization is necessary for comparative purposes, as well as for the calculation, in the case of combustion systems, of the calorific power supplied according to the calorific power of the gases, presented on the same normalization basis. Furthermore, for safety purposes, the complete assembly also requires valves for this purpose, for example solenoid type valves, which are normally closed and interconnected in series in order to guarantee airtightness in the event of a breakdown or the absence of a flame, or the emergency interruption of the flow in accordance with any predefined condition.

### Problems inherent to the abovementioned technical field

The use of a system composed of individual valves for flow control, regulation, measurement and safety in the supply of gas, especially fuel, is not an attractive solution in terms of cost versus benefit. As has been widely commented on, this is due to the fact that a large number of components are necessary, which sometimes makes the system unstable owing to the possible absence of one of these components, as they are required to undergo constant preventive and also corrective maintenance. Therefore, in addition to the safety aspect, it is necessary to consider the high cost involved in the operating of such systems, not only acquisition and assembly costs but also maintenance costs (preventive and/or corrective).

Flow control valves depend on line pressure stability, which has several sources of variation, thus making it necessary to use an inlet pressure regulation valve in order to guarantee that the flow control valve will operate with minimum interference caused by fluctuations.

The abovementioned fluctuations may be caused by a series of factors. For illustrative purposes, one such situation refers, for example, to a gas line whose speed generates great turbulence in the flow. Consequently, the derivation of a secondary line with a smaller diameter to a burner will certainly lead to considerable fluctuation in the gas pressure and may cause instability in the resulting flame.

The flow control valves which are currently available are normally designed to operate at low fluid speed. In order to obtain this condition when a high flow rate is necessary, the diameter required for the piping and the valves has to be very large, involving more maintenance of the line and naturally greater cost and safety.

In addition, as already explained, the high complexity of the valve assembly involved produces an unstable and not very predictable gas flow.

### Objectives of the invention

The objective of the invention is thus to propose a single system for controlling the variables inherent to high or low pressure gas or air flow, among them active flow control, regulation and measurement, including the safety system, using the concept of flow rate measurement by the difference in pressure between the inlet and outlet of the valve and its correct interpretation, in order to control or command the variable opening or closing of the valve so as to compensate the error between the actual flow rate, which suffers from the interference of fluctuations, and the programmed flow rate. For this purpose, a valve is used which substitutes the entire conventional model.

The valve itself has its control device connected to the proposed system, which has active control of the movement of the valve ram. Thus, a possible increase in the inlet pressure is compensated by the partial closure of the ram, keeping the flow rate constant. Furthermore, within the limits of the airtightness and mechanical resistance of the materials used in its manufacture, it is possible to work with fairly wide inlet pressure ranges, since the valve, as a result of the system of the invention, will respond with a bigger or smaller opening depending on such conditions.

Basically, the valve of the invention, which is controlled by the system proposed, regulates the gas or air flow rate, even under conditions of inlet pressure variation. In short, it has the following features:
- It maintains the flow rate at a regulated level and within the desired precision profile, regardless of inlet pressure variations;
- It measures the instantaneous flow rate;
- It permits continuous regulation of the flow rate at absolute levels, by means of a predefined flow rate curve according to time or by a temperature curve according to time (with the help of a temperature sensor located in the ambient to be heated);
- It guarantees airtight closure as a safety measure, in the event of an electric power supply failure, the absence of a flame or any other predefined parameter.

### Main advantages of the invention

- Single system/valve for flow rate safety, measurement, control and regulation;
- Active system regardless of pressure uniformity and inlet temperature;
- Operation at any pressure intensity, within a wide inlet pressure range;
- Valve portability;
- Gas or air flow stability;
- Small number of components involved;
- Low maintenance;
- Reduced risk;
- High resolution;
- Prompt response time;
- Low cost;
- The system can be used with a wide range of equipment, due to the fact that it can be used under high pressure.

### List of drawings

The invention will be technically explained hereunder based on the drawings listed below, which are for illustrative and not restrictive purposes, showing its main components:

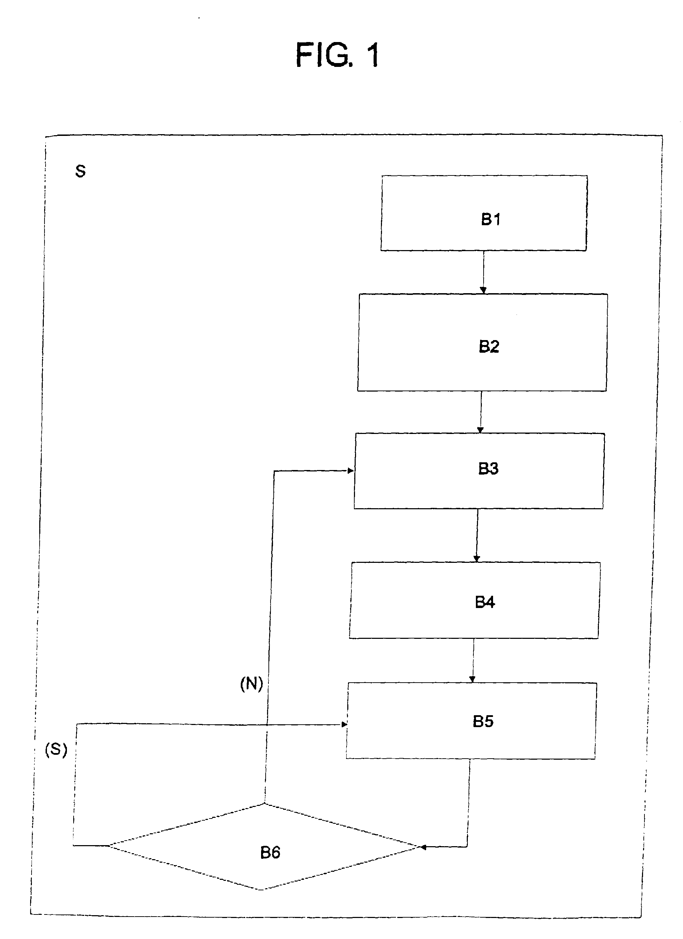

Figure 1: Block diagram of the system;

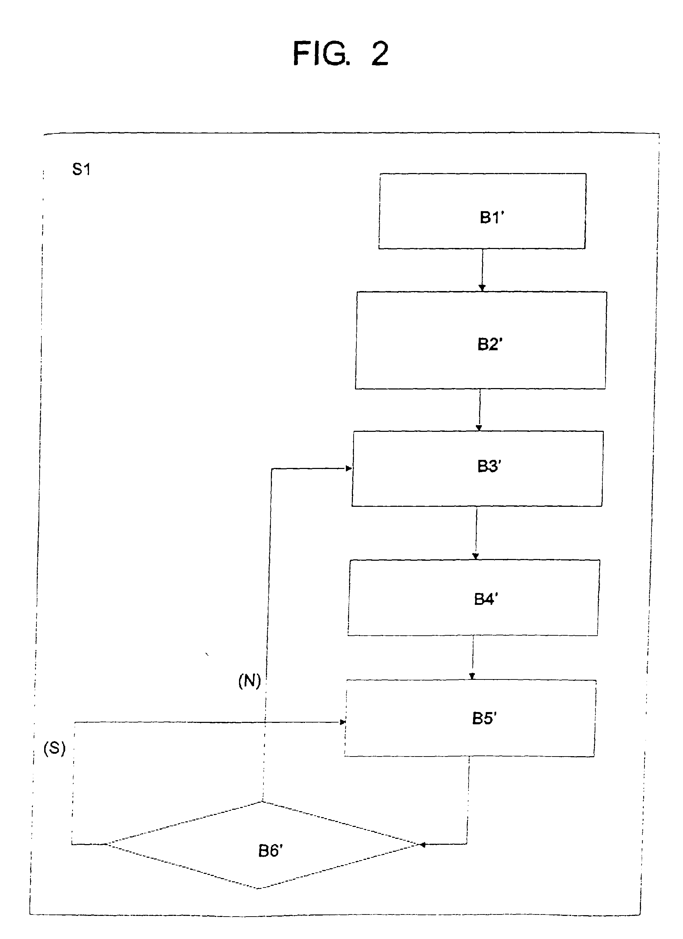

Figure 2: Block diagram of an alternative system;

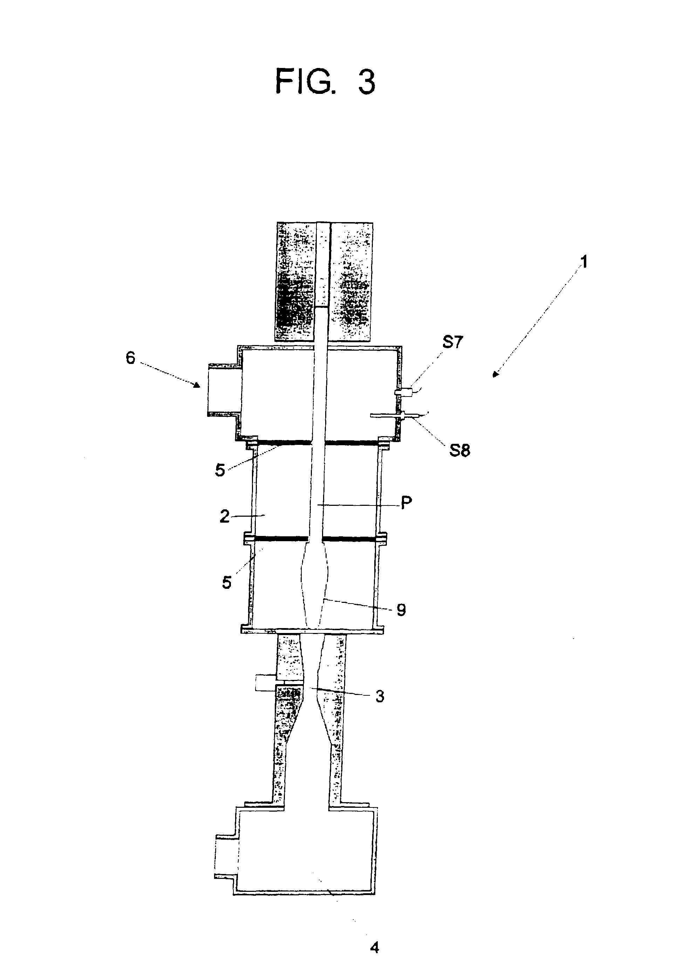

Figure 3: Front cross-section of the valve;

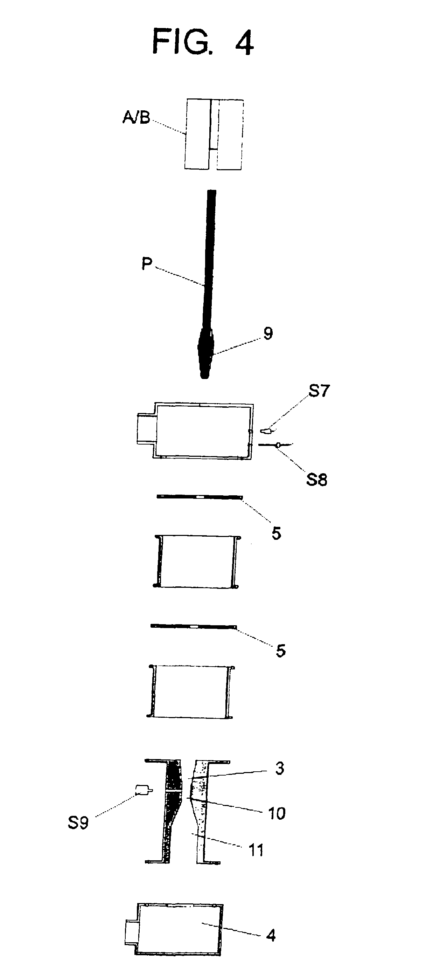

Figure 4: Exploded cross-section of the valve;

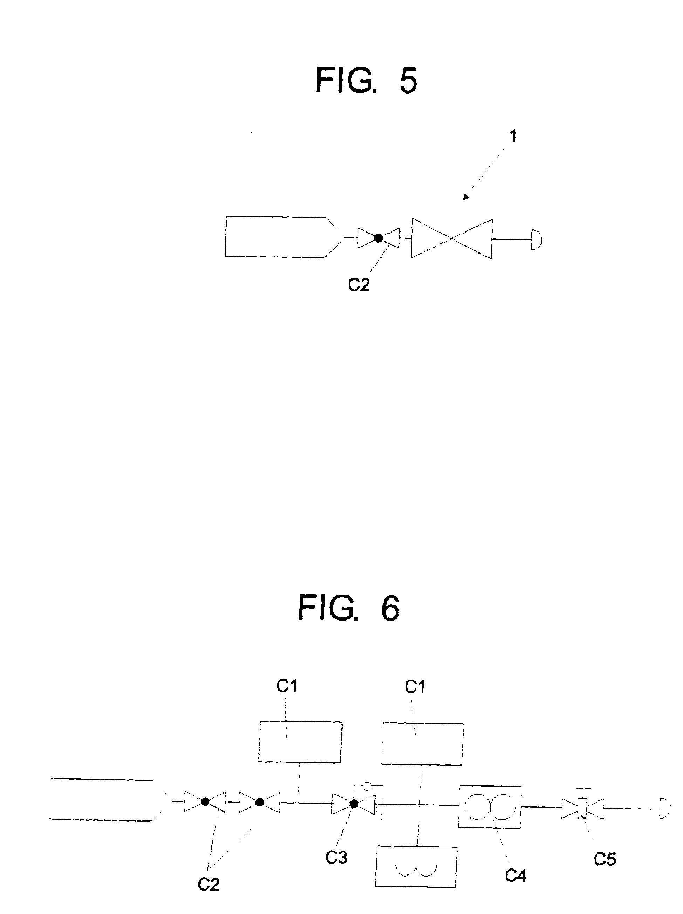

Figure 5: Schematic flow chart of the system of the invention;
Figure 6: Schematic flow chart of a conventional system.

### Detailed description of the invention

The single system for high or low pressure gas flow rate control and a high or low pressure gas control valve of this patent application consists essentially of a system (S) which has active control of the movement of the ram (E) of the single valve (1) by the concept of measurement of the flow rate and by the difference in pressure between the inlet and outlet of the said valve (1) which, based on certain predefined parameters, opens or closes the ram (E) in order to compensate the error between the actual and programmed flow rates or the actual and programmed pressure differential.

More particularly, the system (S) proposed, following certain stages (B) that will be described hereunder, substitutes the various measurement components (C1), solenoids (C2), pressure regulation valve (C3), flow meter (C4) and flow regulation valve (C5) in conventional systems, being capable of controlling the ram (E) of a valve (1) located after a solenoid valve (C2), which may be operated by a step engine (A) as well as by an electromagnetic mechanism (B). The said system at a first stage (B1) reads the flow rate set point, at a second stage (B2) converts the flow rate set point into a set point with a pressure differential between the inlet and outlet of the valve, at a third stage (B3) reads the actual pressure differential, at a fourth stage (B4) calculates the error between the actual pressure differential in relation to the pressure differential of the set point, at a fifth stage (B5) seeks the estimated position of the ram of the valve (1), then at a sixth stage (B6) analyses the tolerance error and takes a decision; if the error is smaller than the tolerance (N), it goes back to the third stage (B3) and if the error is greater than the tolerance (S), it goes back to the fifth stage (B5), i.e. it seeks the estimated position of the ram (E).

Maintaining the same inventive concept, the system can function by establishing a flow rate set point and by converting the pressure differential read in terms of the flow rate and subsequent comparison of the actual flow rate and the flow rate set point. The said system (S1) can be described more specifically in that at a first stage (B1') it performs the reading of the flow rate set point, at a second stage (B2') it reads the actual pressure differential, at a third stage (B3') it converts the actual pressure differential into actual flow rate, at a fourth stage (B4') it calculates the error between the measured flow rate in relation to the flow rate set point, at a fifth stage (B5') it seeks the estimated position of the ram of the valve (1), then at a sixth stage (B6') it analyses the tolerance error and takes a decision; if the error is smaller than the tolerance (N), it goes back to the third stage (B3') and if the error is greater than tolerance (S), it goes back to the fifth stage (B5'), i.e. it seeks the estimated position of the ram (E).

More particularly, the valve (1) of the invention makes the abovementioned stages (B or B') effective, for which purpose three main regions are formed: one gas admission chamber (2), one Venturi (3) and one outlet chamber (4).

The gas admission chamber (2) has internally a series of flow rate aligners, which are simply drilled plates (5) that force the passage of the gas or air in the direction of alignment of the Venturi (3). The number and size of the said plates (5) are appropriate for the capacity and format of the valve (1). With respect to the admission (6) of the gas or air, it may be parallel (not represented) or orthogonal to the Venturi (3), and at the inlet point there are sensors for measuring pressure (S7) and temperature (S8).

The Venturi (3) has a conical access (9) whose geometry matches the valve (1), the opening of which is regulated by an passage (10) with a form and dimension coincident with the Venturi (3), which can be activated by a step engine (A) or by an electromagnetic mechanism (B). After the converging access inlet (9) of the Venturi, there is a small passage (10) where the main pressure drop occurs and, after this section, there is a divergent outlet (11) which configures the Venturi effect. In this outlet region (11) there is a second sensor (S9) intended to measure the pressure at this point.

After the Venturi (3), there may be an outlet chamber (4) for flow alignment or, depending on the case, the outlet can be directly from the Venturi (3).

Operational intervention in the system/valve of the invention occurs by means of a specific panel (not represented), local or remote, whose dials should permit instant flow display, the unit being automatically selected according to the type of gas and specific scale basis for each application, normalized or not depending on the pressure and temperature.

In the same valve (1), control can be performed not only by the gas flow rate but also by the ambient temperature, for which purpose it is sufficient to install a thermocouple next to the burner, this being the application of the valve which, by an adequate interface, will control the opening and/or closing of the ram (E) of the valve in response to the difference between the measurement of the thermocouple and the projected heating curve.

Finally, in order, for example, to heat large-size equipment, several thermocouples may be installed inside thereof whose duly worked data would serve as an input for simultaneous control systems with several valves, which would operate the variable opening and closing of the valve rams, thus achieving in the same system the centralized control of the heating in accordance with predefined heating curves.

## Claims

1. Single system for high or low pressure gas flow rate control and a high or low pressure gas control valve, **characterized by** a system (S) used for both gas and air, at high or low pressure, which has active control of the movement of the ram (E) of the single valve (1) by the concept of measurement of the flow rate and by the difference in pressure between the inlet and outlet of the said valve (1) which, based on certain predefined parameters, variably opens or closes the ram (E), in order to compensate the error between the actual and programmed flow rates or the actual and programmed pressure differential.

2. Single system for high or low pressure gas flow rate control, according to claim 1, **characterized in that** the system (S) at a first stage (B1) reads the flow rate set point, at a second stage (B2) converts the flow rate set point into a set point with a pressure differential between the inlet and outlet of the valve, at a third stage (B3) reads the actual pressure differential, at a fourth stage (B4) calculates the error between the actual pressure differential in relation to the pressure differential of the set point, at a fifth stage (B5) seeks the estimated position of the ram of the valve (1), then at a sixth stage (B6) analyses the tolerance error and takes a decision; if the error is smaller than the tolerance (N), it goes back to the third stage (B3) and if the error is greater than the tolerance (S), it goes back to the fifth stage (B5), i.e. it seeks the estimated position of the ram (E).

3. Single system for high or low pressure gas flow rate control, according to claim 1, **characterized in that** the system (S1) at a first stage (B1') reads the flow rate set point, at a second stage (B2') reads the actual pressure differential, at a third stage (B3') converts the actual pressure differential into actual flow rate, at a fourth stage (B4') calculates the error between the measured flow rate in relation to the flow rate set point, at a fifth stage (B5') seeks the estimated position of the ram of the valve (1), then at a sixth stage (B6') analyses the tolerance error and takes a decision; if the errors is smaller than the tolerance (N), it goes back to the third stage (B3') and if the error is greater than the tolerance (S), it goes back to the fifth stage (B5'), i.e. it seeks the estimated position of the ram (E).

4. Single system for high or low pressure gas flow rate control, according to claim 1, **characterized in that** the valve (1) of the invention makes the abovementioned stages (B and B') effective, for which purpose three main regions are formed: one gas admission chamber (2), one Venturi (3) and one outlet chamber (4), the gas admission chamber (2) having internally a series of flow rate aligners, which are simply drilled plates (5) that force the passage of the gas or air in the direction of alignment of the Venturi (3), the admission (6) of the gas or air being either parallel or orthogonal to the Venturi (3) with sensors at the inlet point for measuring pressure (S7) and temperature (S8), the Venturi being regulated by a ram (10) which may be activated by a step engine (A) or by an electromagnetic mechanism (B), with a second sensor (S9) at the end of the Venturi (3) intended to measure the pressure at this point, and possibly an outlet chamber (4) after the Venturi (3) for flow alignment or, depending on the case, an outlet directly from the Venturi (3).

5. Single system for high or low pressure gas flow rate control, according to claim 1, **characterized in that** the operational intervention in the system/valve of the invention occurs by means of a specific local or remote panel (not represented).

6. Single system for high or low pressure gas flow rate control, according to claim 1, **characterized in that** in the same system (S) and valve (1), control can be performed not only by the gas flow rate but also by the temperature of the ambient to be heated, for which purpose it is sufficient to install a thermocouple in the ambient to be heated, this being the application of the valve which, by an adequate interface, will control the gradual opening and/or closing of the ram (E) of the valve in response to the difference between the measurement of the thermocouple and the projected heating curve.

7. Single system for high or low pressure gas flow rate control, according to claim 1, **characterized in that** in the same system (S) and valve (1), in large-size equipment several thermocouples may be installed inside thereof whose duly worked data would serve as an input for simultaneous control systems with several valves, which would operate the variable opening and closing of the valve rams, thus achieving in the same system a centralized control of the heating in accordance with predefined heating curves.
